# EUROPEAN PATENT SPECIFICATION

(11) **EP 2 288 654 B1**
(45) Date of publication and mention of the grant of the patent: **02.01.2013**
(21) Application number: 09739900.0
(22) Date of filing: 01.05.2009
(51) Int. Cl.: C08L 23/08, B32B 27/32

(54) **COMPOSITIONS COMPRISING ETHYLENE ACID COPOLYMERS AND FUNCTIONAL ETHYLENE COPOLYMERS**
ZUSAMMENSETZUNGEN, UMFASSEND ETHYLEN-SÄURE-COPOLYMERE UND FUNKTIONELLE ETHYLENCOPOLYMERE
COMPOSITIONS COMPRENANT DES COPOLYMÈRES D'ACIDE ÉTHYLÉNIQUE ET DES COPOLYMÈRES ÉTHYLÉNIQUES FONCTIONNELS

(30) Priority: 01.05.2008 US 150835
(43) Date of publication of application: 02.03.2011
(73) Proprietor: E. I. du Pont de Nemours and Company, Wilmington, DE 19898 (US)
(72) Inventor: CHOU, Richard, T., Hockessin DE 19707 (US)
(74) Representative: Morf, Jan Stefan
(86) International application number: PCT/US2009/042465
(87) International publication number: WO 2009/135098

(56) References cited:
- WO-A1-95/32241
- WO-A1-2007/079092
- WO-A2-2006/015201
- WO-A2-2006/113000
- WO-A2-2008/141029
- US-A1- 2006 148 988

## Description

### FIELD OF THE INVENTION

This invention relates to compositions derived from a combination of ethylene acid copolymers and functional ethylene copolymers, and optionally ionomers thereof. The compositions are useful for fabricating films, sheets and molded articles.

### DESCRIPTION OF THE RELATED ART

Ethylene acid copolymers and ionomers that are commercially available include NUCREL acid copolymers and SURLYN ionomer resins, both available from E. I. du Pont de Nemours and Company of Wilmington, DE (hereinafter "DuPont"). These acid copolymers and ionomers have adhesion to polar substrates that is greater than that of polyethylene, yet they retain good rigidity and resistance to solvents and moisture. Ethylene acid copolymers are described in U.S. Patent No. 4,351,931.

lonomers are thermoplastic resins that contain metal ions in addition to organic-chain molecules. As used herein, the term "ionomer" refers to the conjugate base of a neutralized or partially neutralized ethylene acid copolymer. Ionomers have some solid-state properties that are characteristic of cross-linked polymers and some melt-fabricability properties that are characteristic of uncrosslinked thermoplastic polymers. See, U.S. Patent No. 3,262,272.

Owing to their unique features, ionomers are used in a wide spectrum of applications in both food packaging and other industrial applications. With excellent hot tack, for example, ionomers are used as sealant layers in food packaging applications. With high toughness, abrasion, and scratch resistance, ionomers are used for golf balls, modifiers, and floor tile applications. As the applications for ionomers expand, it is often found that tailoring certain physical properties, and concomitantly the ionomer's performance characteristics, is necessary for meeting the criteria of the intended applications. Besides typical variables, such as acid content, neutralization, and melt viscosity, in general, it is not easy to modify an ionomer's performance without sacrificing some of its desirable attributes. For example, blends of ionomers with other polymers may attain the desired properties of toughness and resistance; however, the blends are most likely to be nontransparent.

Also, although ionomers have greater adhesion to polar substrates than does polyethylene, this level of adhesion may still be insufficient in many applications. The use of additional adhesive layers may be required in multilayer structures. This strategy can result in higher material and processing costs.

In short, there is a continuing need for tailoring the performance of ionomers to provide more utility in new applications.

### SUMMARY OF THE INVENTION

Described herein is a composition consisting essentially of (1) one or more ethylene acid copolymers comprising copolymerized units derived from the monomers (a) ethylene, (b) one or more α,β-ethylenically unsaturated monocarboxylic acids comprising from 3 to 8 carbon atoms, and optionally (c) one or more alkyl (meth)acrylates; and (2) one or more functional ethylene copolymers comprising copolymerized units derived from the monomers (d) ethylene; (e) an ethylenically unsaturated carboxylic acid comprising from 4 to 8 carbon atoms and further comprising at least two carboxylic acid groups or a derivative of the ethylenically unsaturated carboxylic acid selected from the group consisting of acid anhydrides, monoesters and diesters; and optionally (f) vinyl acetate or one or more alkyl (meth)acrylates. The alkyl groups comprise from 1 to 8 carbon atoms and are branched or unbranched and saturated or unsaturated. In addition, at least a portion of the carboxylic acid moieties present in the ethylene acid copolymer(s) and the functional ethylene copolymer(s) is optionally neutralized.

The composition may be processed by extruding or casting a sheet or by blowing a film, or by blow molding or injection molding a molde article. Accordingly, also provided herein are shaped articles comprising the composition described above. The article may be in the form of a monolayer or multilayer film or sheet, a pouch or bag, tubing or a molded article. Further provide herein is a package for containing a product. The package comprises the composition described above.

Preferably, the article is a multilayer film or sheet comprising a first layer and an additional layer directly adhered to the first layer. The additional layer comprises or is prepared from metal, EVOH or polyamide, and the first layer comprises the composition.

### DETAILED DESCRIPTION OF THE INVENTION

Although methods and materials similar or equivalent to those described herein can be used in the practice or testing of the invention, suitable methods and materials are described herein. The materials, methods, and examples described herein are illustrative only.

Unless stated otherwise, all percentages, parts, ratios, are by weight.

When an amount, concentration, or other value or parameter is given as a range, as a preferred range or as a list of upper preferable values and lower preferable values, this is to be understood as specifically disclosing all ranges formed from any pair of any upper range limit or preferred value and any lower range limit or preferred value, regardless of whether such ranges are separately disclosed. Where a range of numerical values is recited herein, unless otherwise stated, the range is intended to include the endpoints thereof, and all integers, fractions and irrational numbers within the range. In addition, when a component is indicated as present in a range having a lower limit of 0, such component is an optional component. Such optional components, when present, are included in a finite amount preferably of at least about 0.1 weight % of the total weight of the composition. The term "finite amount" refers to an amount that is greater than zero. Further in this connection, when the term "about" is used in describing a value or an end-point of a range, the disclosure should be understood to include the specific value or end-point referred to. In summary, the scope of the invention is not limited to the specific values recited when defining a range.

As used herein, the terms "comprises," "comprising," "includes," "including," "containing," "characterized by," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of excludes any element, step, or ingredient not specified in the claim, closing the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" limits the scope of a claim to the specified materials or steps and those that do not materially affect the basic and novel characteristic(s) of the claimed invention. "A'consisting essentially of claim occupies a middle ground between closed claims that are written in a 'consisting of format and fully open claims that are drafted in a 'comprising' format." Optional additives as defined herein, at levels that are appropriate for such additives, and minor impurities are not excluded from a composition by the term "consisting essentially of", however.

Where an invention or a subcombination thereof is described with an openended transitional phrase such as "comprising," unless otherwise stated in specific instances, the term should be interpreted to include a description of the invention or subcombination using the transitional phrases "consisting essentially of" and "consisting of". Likewise, unless otherwise stated, an invention or subcombination described using the transitional phrase "consisting essentially of" also includes a description of the invention or subcombination using the transitional phrase "consisting of".

The indefinite articles "a" and "an" are employed to describe elements and components of the invention. The use of these articles means that one or at least one of these elements or components is present. Although these articles are conventionally employed to signify that the modified noun is a singular noun, as used herein the articles "a" and "an" also include the plural, unless otherwise stated in specific instances. Similarly, the definite article "the", as used herein, also signifies that the modified noun may be singular or plural, again unless otherwise stated in specific instances.

Finally, the terms "sheet" and "film" are synonymous and are used interchangeably herein to describe articles having substantially planar forms, either monolayer or multilayer. The processing method by which the article is formed may influence whether the term "sheet" or "film" is used. Typically, however, sheets may have a thickness of about 10 mils (0.25 mm) or greater. More specifically, although sheets and films may be distinguished by their different thicknesses, in general the function of a planar article or a layer in planar article is determined by its composition, rather than by its thickness. Thus, a function that can be performed by a sheet of a particular composition may also be performed by a film of the same or similar composition, and vice versa. Those of skill in the art are aware that there may be variations in the efficiency of the performance of a particular function, resulting from changes in a layer's thickness.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 15 weight % of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such. The term "dipolymer" refers to polymers consisting essentially of two monomers, and the term "terpolymer" refers to polymers consisting essentially of three monomers.

The term "unmodified", as used herein, refers to ionomers that are not blended or reacted with any material that has a significant effect on the properties of the unblended or unreacted ionomer.

Finally, the term "(meth)acrylic", as used herein, alone or in combined form, such as "(meth)acrylate", refers to "acrylic or methacrylic", for example, "acrylic acid or methacrylic acid", or "alkyl acrylate or alkyl methacrylate".

Described herein are compositions containing ethylene acid copolymers or ionomers thereof that have expanded performance properties and that also retain many of the positive attributes of acid copolymers or ionomers.

For example, a functional ethylene copolymer such as poly(ethylene-co-ethyl hydrogen maleate) (E/EHM) can be readily blended with ethylene acid copolymers or ionomers thereof in all compositional ranges without sacrificing optical clarity and other general attributes. Ethylene acid copolymers modified with E/EHM exhibit enhanced adhesion to metals and other substrates. The incorporation of E/EHM into ethylene acid copolymers introduces functional groups that provide enhanced adhesion to polar polymers such as polyethylene-co-vinyl alcohol (EVOH) and nylon or other polyamides. Therefore, in a multilayer laminate structure, the blend may not require a tie layer to adhere to other polar polymers.

Preferably, the compositions comprise from 20 to 95 weight % of component (1), the ethylene acid copolymer(s) or ionomer(s), and from 5 to 80 weight % of component (2), the functional ethylene copolymer(s). For example, compositions may comprise from 5 to 45 weight % of component (2). More preferably, the compositions comprise from 60 to 80 weight % of component (1), the ethylene acid copolymer(s) or ionomer(s), and from 20 to 40 weight % of component (2), the functional ethylene copolymer(s).

The E/EHM-containing ionomers can be obtained by neutralization of a mixture of E/EHM and an ethylene acid copolymer. Again, this method is useful for all compositional ratios of ethylene acid copolymer to E/EHM. Alternatively, previously-prepared ionomer(s) of ethylene acid copolymer(s) can be blended with E/EHM to form a modified ionomer composition.

The enhanced adhesion of the modified ionomer compositions to substrates including metals and other polymers such as EVOH and nylon is useful in overmolding applications, for example. The blending of E/EHM with ionomers also provides a versatile way to alter the melt rheology of ionomers. For example, ionomers of high melt viscosity are particularly useful in some processes such as blow molding. Furthermore, pre-blending with E/EHM improves the dispersion of ionomers into other polymers. This property enables a useful intermediate step in polymer modifications.

### Ethylene Acid Copolymers

The first component of the composition comprises one or more copolymers having copolymerized units derived from the monomers (a) ethylene, (b) one or more C₃-C₈ α,β-ethylenically unsaturated monocarboxylic acids, and optionally (c) one or more comonomers selected from the group consisting of alkyl acrylate and alkyl methacrylate. The alkyl groups comprise from 1 to 8 carbon atoms, preferably from 1 to 4 carbon atoms, and may be branched or unbranched, and, independently, the alkyl groups may be saturated or unsaturated. The terms "ethylene acid copolymer" and "acid copolymer" as used herein refer to these copolymers.

The ethylene acid copolymers are preferably copolymers in which the acid comonomers are directly copolymerized with ethylene and the copolymerized units are integral to the polymer chain. "Grafted" acid copolymers, in which the acid comonomers are added to an existing polymer chain via a post-polymerization "grafting" reaction, may also be suitable, however. Preferably, the C₃₋₈α,β-ethylenically unsaturated carboxylic acids include acrylic acid or methacrylic acid; more preferably, the C₃₋₈ α,β-ethylenically unsaturated carboxylic acids consist essentially of acrylic acid or methacrylic acid.

More specifically, the ethylene acid copolymer can be described as an E/X/Y copolymer wherein E represents the copolymerized units derived from ethylene, X represents the copolymerized units derived from the C₃-C₈ α,β-ethylenically unsaturated monocarboxylic acid, such as acrylic acid or methacrylic acid, wherein X is present in from 2 to 30 weight % of the E/X/Y copolymer; and Y represents the copolymerized units derived from alkyl acrylate or alkyl methacrylate, wherein Y is present in 0 to 40 weight % of the E/X/Y copolymer.

An ethylene acid copolymer that does not contain the optional comonomers alkyl acrylate or alkyl methacrylate (that is, the amount of Y is exactly 0% of the E/X/Y copolymer) can be described as an ethylene acid dipolymer, or an E/X dipolymer.

Preferably, the acid copolymer is an E/X dipolymer, and, more preferably, a copolymer of ethylene and (meth)acrylic acid. More preferred dipolymers and compositions comprising the dipolymers are those wherein the copolymerized comonomers of C₃ to C₈ α,β ethylenically unsaturated carboxylic acid are present in the dipolymer in an amount from 4 weight %, or 5 weight %, or 8 weight % to 30 weight%; or from 10 to 25 weight %. More preferred dipolymers and compositions comprising the dipolymers are those wherein the copolymerized comonomers of C₃ to C₈ α,β ethylenically unsaturated carboxylic acid comprise acrylic acid or methacrylic acid. Specific examples of suitable ethylene acid copolymers include, without limitation, ethylene/acrylic acid dipolymers and ethylene/methacrylic acid dipolymers.

As described above, however, the ethylene acid copolymers may also contain a third, softening monomer Y. By "softening", it is meant that the crystallinity is disrupted, that is, the polymer is made less crystalline. Thus, ethylene acid copolymers comprising a third, softening monomer Y can be described as E/X/Y terpolymers. Preferred E/X/Y terpolymers consist essentially of copolymerized comonomers of ethylene, copolymerized monomers of C₃ to C₈ α,β ethylenically unsaturated carboxylic acid, and copolymerized comonomers of alkyl acrylate or alkyl methacrylate.

Also preferably, in E/X/Y terpolymers the amount of X is from 2 to 25 weight % or from 5 to 15 weight %; and the amount of Y is from 0.1 to 40 weight %, from 1 to 35 weight % or from 5 to 35 weight %. Also preferred are terpolymers and compositions comprising the terpolymers wherein the copolymerized comonomers of C₃ to C₈ α,β ethylenically unsaturated carboxylic acid comprise acrylic acid or methacrylic acid.

Specific examples of suitable terpolymers include, without limitation, ethylene/acrylic acid/n-butyl acrylate, ethylene/acrylic acid/iso-butyl acrylate, ethylene/acrylic acid/methyl acrylate, and ethylene/acrylic acid/ethyl acrylate terpolymers; ethylene/acrylic acid/n-butyl methacrylate, ethylene/acrylic acid/isobutyl methacrylate, ethylene/acrylic acid/methyl methacrylate, and ethylene/acrylic acid/ethyl methacrylate terpolymers; ethylene/methacrylic acid/n-butyl acrylate, ethylene/methacrylic acid/iso-butyl acrylate, ethylene/methacrylic acid/methyl acrylate, and ethylene/methacrylic acid/ethyl acrylate terpolymers; and ethylene/methacrylic acid/n-butyl methacrylate, ethylene/methacrylic acid/iso-butyl methacrylate, ethylene/methacrylic acid/methyl methacrylate, and ethylene/methacrylic acid/ethyl methacrylate terpolymers.

Ethylene acid copolymers may be made by any suitable method. Ethylene acid copolymers with high levels of acid may be prepared in continuous polymerizers by use of "co-solvent technology" as described in U.S. Patent No. 5,028,674 or by employing somewhat higher pressures than those at which copolymers with lower acid can be prepared.

### Functional Ethylene Copolymers

The second component of the blend comprises at least one functional ethylene copolymer having copolymerized units derived from the monomers (d) ethylene; (e) one or more functional comonomers selected from the group consisting of ethylenically unsaturated carboxylic acids comprising at least two carboxyl (-C(O)OH) groups and from 4 to 8 carbon atoms, or derivatives thereof such as acid anhydrides, monoesters or diesters that are preferably alkyl esters; and optionally (f) one or more monomers selected from vinyl acetate, alkyl acrylates and alkyl methacrylates; wherein the alkyl groups are as defined above with respect to ethylene acid copolymers.

To reiterate, the functional ethylene copolymer may be a dipolymer or a higher order copolymer, such as a terpolymer or tetrapolymer. Preferably, the functional ethylene copolymer comprises copolymerized units derived from (d) ethylene; (e) at least one functional comonomer that is an ethylenically unsaturated dicarboxylic acid or derivative thereof, wherein the functional monomer is present in an amount of from 5 to 20 wt% or from 4 to 15 weight % of the functional ethylene copolymer; and (f) one or more monomers selected from vinyl acetate and alkyl (meth)acrylate that are present in an amount of from 0 to about 10 weight % of the functional ethylene copolymer.

Advantageously, component (e) is present in a range from 6 to 15 or from 6 to 10 weight % of the copolymer. Preferably, component (e) is derived from a dicarboxylic acid, and more preferably from a C₁-C₄ alkyl monoester of maleic acid. Also preferably, component (e) is present in an amount of from 8 to 12 wt% or from 6 to 8 weight % of the total weight of the functional ethylene copolymer.

When component (f) is present in the functional ethylene copolymer, it is preferably present in an amount of from 1 to 35 weight %, more preferably from 5 to 35 weight %, and still more preferably from 0.1 to 10 weight % or from 0.1 to 5 weight%, based on the total weight of the functional ethylene copolymer.

Specific examples of suitable functional comonomers include, without limitation, unsaturated anhydrides such as maleic anhydride and itaconic anhydride; alkyl monoesters of butenedioic acids (e.g., maleic acid, fumaric acid, itaconic acid and citraconic acid), including methyl hydrogen maleate, ethyl hydrogen maleate, propyl hydrogen fumarate, and 2-ethylhexyl hydrogen fumarate; alkyl diesters of butenedioic acids such as dimethylmaleate, diethylmaleate, and dibutylcitraconate, dioctylmaleate, and di-2-ethylhexylfumarate. Of these, maleic anhydride, ethyl hydrogen maleate and methyl hydrogen maleate are preferred. Maleic anhydride and ethyl hydrogen maleate are more preferred and ethyl hydrogen maleate is still more preferred.

Higher order copolymers that are examples of the functional copolymer include terpolymers such as ethylene/methyl acrylate/ethyl hydrogen maleate, ethylene/butyl acrylate/ethyl hydrogen maleate and ethylene/octyl acrylate/ethyl hydrogen maleate.

The functional ethylene copolymers may be obtained by a process of high-pressure free radical polymerization wherein all monomers are added simultaneously so that the comonomer units react with each other to form the polymer chain. A high-pressure process suitable for preparing such copolymers is described, for example, in U.S. Patent No. 4,351,931. This process provides copolymers in which the acid comonomers are directly copolymerized with ethylene and the copolymerized units are integral to the polymer chain. The copolymerized units are thus incorporated into the polymer backbone or chain and are not incorporated as pendant groups onto a previously formed polymer backbone. Accordingly, copolymers made by direct copolymerization processes are distinct from graft copolymers, wherein a monomer is grafted onto an existing polymer, often by a subsequent free radical reaction. In the compositions described herein, the functional ethylene copolymer is a direct copolymer. Optionally, however, it may be further grafted with one or more additional functional comonomers that may be the same as or different than the directly copolymerized functional comonomer(s).

### Ionomers

One or both of components (1) and (2) may be present in the composition as an ionomer. Ionomers are ionic copolymers that are obtained by neutralization of an acid copolymer. The acid copolymer may be an E/X or E/X/Y copolymer, such as those described above.

In any discussion of ionomers herein, the term "acid copolymer" includes functional ethylene copolymers comprising carboxyl groups or esters that may be de-esterified to form carboxyl groups.

A basic compound or neutralizing agent having at least one cation, for example an alkali metal, transition metal, or alkaline earth metal cation, is used to neutralize at least a portion of the acidic groups in the acid copolymer, resulting in a thermoplastic ionomeric resin. Basic compounds of note include formates, acetates, nitrates, carbonates, hydrogen-carbonates, oxides, hydroxides or alkoxides of the ions of alkali metals, and formates, acetates, nitrates, oxides, hydroxides or alkoxides of the ions of alkaline earth metals and transition metals. Preferred cations include lithium, sodium, potassium, magnesium, calcium, barium or zinc, or combinations of two or more of these cations. More preferred are sodium, calcium, magnesium or zinc cations, or combinations of two or more of these cations.

The ionomers may be neutralized to any level that does not result in an intractable polymer, e.g., a material that is not melt processible, or a material that does not have useful physical properties. For example, 10 to 90 %, 10 to 70% or 50 to 75 %, of the acid moieties of the acid copolymer may be neutralized to their conjugate base form.

Suitable ionomers may be prepared from the acid copolymers described above by methods known in the art, such as those described in U.S. Patent No. 3,262,272, *inter alia.* For example, neat basic compound(s) can be added to an acid copolymer. The basic compound(s) may also be premixed with a polymeric material, such as a different acid copolymer having a higher melt index, to form a "masterbatch" that can be added to the acid copolymer to be neutralized. Typically, neutralization takes place as part of an extrusion process.

It is apparent that the neutralization of a bulk acid copolymer may not achieve a stable equilibrium within minutes, seconds or an even shorter time, as a solution process might. To take account of this phenomenon, when the amount of basic compound necessary to neutralize a desired amount of acidic groups in the acid copolymer (which may be calculated through the use of basic stoichiometric principles) is added to the acid copolymer, the ionomer is said to have the desired "% nominal neutralization" or it is said to be "nominally neutralized" to the desired level, with the understanding that the actual neutralization level may be different, or may change over time.

Actual neutralization levels may be determined using infrared spectroscopy, by comparing the intensities of an absorption peak attributable to carboxylate anion stretching vibrations at 1530 to 1630 cm⁻¹ and an absorption peak attributable to carbonyl stretching vibrations at 1690 to 1710 cm⁻¹.

Non-limiting, illustrative examples of ionomers include E/15MAA/Na, E/19MAA/Na, E/15AA/Na, E/19AA/Na, E/15MAA/Mg and E/19MAA/Li (wherein E represents ethylene, MAA represents methacrylic acid, AA represents acrylic acid, the number represents the weight % of monocarboxylic acid present in the copolymer and the atomic symbol represents the neutralizing cation).

Some suitable ionomers derived from ethylene acid copolymers are commercially available from DuPont under the SURLY® trademark.

### Processes for Fabricating the Composition

Components (1) and (2) can be mixed together in any ratio using standard mixing techniques. For example, the acid copolymer of component (1) may be mixed with the functional copolymer of component (2) to prepare a blend. Depending on the requirements of a particular application, the ratio of components (1) and (2) can be manipulated to provide an appropriate balance of properties such as clarity, toughness and low temperature impact strength. The blends typically exhibit improved adhesion to substrates, such as aluminum foil, compared to either the neat acid copolymer of component (1) or the neat functional ethylene copolymer of component (2). Also, blends typically exhibit improved adhesion to polar polymers, such as EVOH and nylon or other polyamides.

Optionally, the composition comprising components (1) and (2) can be neutralized with basic compounds, using methods similar to those described above for preparing ionomers, to provide a composition that is at least partially neutralized by one or more cations, such as alkali metal, transition metal, or alkaline earth metal cations. When the composition comprising components (1) and (2) is neutralized, the result is a modified ionomer composition. Alternatively, an unmodified ionomer can be mixed with a functional ethylene copolymer to provide a similar modified ionomer blend. The properties of the modified ionomer composition can be manipulated by, for example, varying the extent of neutralization or the cation type.

More specifically, the melt-processible, modified ionomer compositions described herein may be produced by heating a mixture of the acid copolymer(s) or ionomer(s), the functional ethylene copolymer(s), and at least one basic compound capable of neutralizing the acid moieties of the acid copolymer and the functional copolymer. For example, the components of the composition can be
(a) mixed by melt-blending the ethylene α,β-ethylenically unsaturated carboxylic acid copolymer(s) or melt-processible ionomer(s) thereof with one or more functional ethylene copolymers, and concurrently or subsequently
(b) adding basic compound(s) capable of neutralizing the acid moieties in the acid copolymer and those in the functional copolymer, in an amount that is sufficient to achieve the desired neutralization level.

Melt-blending acid copolymers and functional copolymers and neutralizing (either simultaneously or subsequently) allows the neutralized composition to be prepared without the use of an inert diluent while melt processibility in the intended neutralization range is maintained.

### Optional Components

The compositions may optionally comprise additional thermoplastic materials blended with component (1) and component (2). Blending additional components may provide alternate means to modify the properties of a composition, for example by manipulating the amount and type of additional components present in the composition. Furthermore, blending additional thermoplastic materials can allow for easier, lower cost manufacture of polymer compositions by allowing one to prepare fewer base resins that can be subsequently modified to obtain desired properties.

Examples of other thermoplastic materials that can be used in addition to components (1) and (2) include nonionomeric thermoplastic copolymers. The additional nonionic thermoplastic polymer components can be selected from among polyamides, copolyetheresters, copolyetheramides, elastomeric polyolefins, styrene diene block copolymers, thermoplastic polyurethanes, maleic anhydride-grafted polymers, these classes of polymers being well known in the art.

Polyolefins are also suitable as other thermoplastic materials. Polyolefins include, without limitation, homopolymers of olefins and copolymers of two or more olefins. Examples of suitable polyolefins include, without limitation, polyethylene, polypropylene, polybutadiene, and polyoctene. Polyethylenes are preferred polyolefins. Examples of suitable polyethylenes include, without limitation, including high molecular weight polyethylene (HMWPE); high density polyethylene (HDPE); medium density polyethylene (MDPE); low density polyethylene (LDPE); linear low density polyethylene (LLDPE); and very low density polyethylene (VLDPE).

Of particular note are blends further comprising maleic anhydride-grafted polymers (maleated polymers). Maleic anhydride-grafted polymers include maleated polyethylene, maleated polypropylene, maleated polyethylene/polypropylene rubber, maleated styrene-ethylene-butene-styrene triblock copolymer, and maleated polybutadiene. Additional details on the preparation and use of maleated polyethylenes are described in U.S. Patent No. 6,545,091. An example of a maleic anhydride modified linear high-density polyethylene is a product sold under the tradename POLYBOND 3009 available from Crompton Corporation. Similar maleated polyolefins are commercially available from DuPont under the trademark FUSABOND®. Preferred maleated polyethylenes include those with densities less than 0.90 g/cm³. These lower-density maleated polyethylenes are considered to be "softer" modifiers.

The compositions can additionally comprise other optional materials, such as conventional additives used in polymeric materials including plasticizers, stabilizers, antioxidants, ultraviolet ray absorbers, hydrolytic stabilizers, anti-static agents, dyes or pigments, fillers, fire-retardants, lubricants, reinforcing agents such as glass fiber and flakes, processing aids, antiblock agents, release agents, and/or mixtures thereof. The amount of optional additives, when used, can vary over a wide range. They will generally be present in quantities of up to about 20 weight percent of the polymer composition. The amount is not critical and may be determined by routine experimentation or by reference to a standard text. Suitable amounts are those that do not detract from the basic and novel characteristics of the polymer compositions.

### Shaped Articles and Processes for their Fabrication

The compositions described herein are useful in a wide variety of shaped articles. Preferred articles and articles of note comprise preferred compositions and compositions of note described above. The articles are suitable for end uses in which high clarity, good barrier properties or good impact strength are required.

The shaped articles include, without limitation, bottles, fuel tanks, and other similar containers. Bottles, fuel tanks and other similar containers can be made via (co)extrusion blow molding by using standard blow molding equipment such as the ones produced by Bekum, Sig, etc. It is particularly suitable to have the bottles produced on Weiler or Rommelag blow-form-fill (BFF) machines under sterile environment. The bottles can be either single layer or multilayer structures comprising at least one layer of the modified ethylene acid copolymer composition or modified ionomer composition described herein.

Another example of a shaped article is a profile. Profiles are defined by having a particular shape and by their process of manufacture is known as profile extrusion. Profiles are not film or sheeting, and thus the process for making profiles does not include the use of calendering or chill rolls. Profiles are also not prepared by injection molding processes. Profiles are fabricated by melt extrusion processes that begin by extruding a thermoplastic melt through an orifice of a die forming an extrudate capable of maintaining a desired shape. The extrudate is typically drawn into its final dimensions while maintaining the desired shape and then quenched in air or a water bath to set the shape, thereby producing a profile. In the formation of simple profiles, the extrudate preferably maintains shape without any structural assistance. With some shapes, support means such as fiber or metal reinforcement may be used to assist in shape retention.

A common shape of a profile is tubing. Tubing assemblies for the transport of liquids and vapors are well known in the art. Tubing is used for fluid transfer in medical applications or in transferring fluids such as beverages. These applications require good moisture barrier properties, chemical resistance, toughness and flexibility. Clarity of the tubing can be important for visual observation of the fluids being transferred. Furthermore, depending on the use of the tubing, there may be exposure to extremely low temperatures and/or extremely high temperatures. The compositions as described herein provide a good combination of toughness, flexibility and clarity, making them suitable for preparation of profiles such as tubing.

The compositions may also be overmolded to a previously formed substrate. Overmolding involves placing the substrate in a mold cavity and molding the molten composition so that it adheres to at least a portion of the substrate. Overmolding can be carried out using injection molding or compression molding processes.

Alternatively, the compositions may be formed into shaped articles by various means known to those skilled in the art. For example, the compositions may be extruded, injection molded, compression molded, blow molded, overmolded, laminated, cut, milled to provide an article that is in a desired shape and size. Optionally, articles comprising the composition may be further processed. For example, portions of the composition (such as, but not limited to, pellets, slugs, rods, ropes, sheets and molded or extruded articles) may be subjected to thermoforming operations in which the composition is subjected to heat, pressure and/or other mechanical forces to produce shaped articles.

### Films, Sheets and Packaging

Preferred shaped articles include films and sheets. The films and sheets may be used in packaging. The film or sheet may have a monolayer structure or a multilayer structure. Preferably, the film or sheet comprises a first layer and an additional layer directly adhered to the first layer. The additional layer comprises or is prepared from metal, EVOH or polyamide, and the first layer comprises the composition described herein.

Often, the multilayer polymeric film when used in packaging will involve at least three categorical layers, including but not limited to an outermost structural or abuse layer, an inner barrier layer, and an innermost layer and optionally one or more adhesive or tie layers disposed therebetween. Also, the innermost layer making contact with and compatible with the intended contents of the pouch is preferably capable of forming lock-up perimeter seals (i.e., seal strengths typically greater than 1,500 gram/inch) for containing the contents of the package. Most preferably the innermost layer is also heat-sealable.

The outermost structural, or abuse, layer can comprise metal, polyethylene, polyester, polyamide, or polypropylene, and it may optionally be oriented. This layer may be reverse printable and is advantageously unaffected by the sealing temperatures used to make the package, since the package is sealed through the entire thickness of the multilayer structure. The thickness of this layer is typically selected to control the stiffness of the package, and may range from 10 to 60 µm, or from 10 to 50 µm.

The inner layer can include one or more barrier layers, depending on which atmospheric conditions (oxygen, humidity, light) that potentially can affect the product inside the pouch. Barrier layer compositions can be metallized polypropylene (PP), polyamide, polyethylene terephthalate (PET), ethylene vinyl alcohol (EVOH), aluminum foil, blends or composites of the same as well as related copolymers thereof. Barrier layer thickness will depend on the sensitivity of the product and the desired shelf life.

EVOH polymers generally have an ethylene content of between 15 mole percent to 60 mole percent, more preferably between 20 to 50 mole percent. The density of commercially available EVOH generally ranges from between 1.12 g/cm³ to 1.20 gm/cm³, the polymers having a melting temperature ranging from between 142°C and 191°C. EVOH polymers can be prepared by well-known techniques or can be obtained from commercial sources. EVOH copolymers may be prepared by saponifying or hydrolyzing ethylene vinyl acetate copolymers. Thus EVOH may also be known as hydrolyzed ethylene vinyl acetate (HEVA) copolymer. The degree of hydrolysis is preferably from 50 to 100 mole percent, more preferably from 85 to 100 mole percent. Suitable EVOH polymers may be obtained from Eval Company of America or Kuraray Company of Japan under the tradename EVAL. EVOH is also available under the tradename SOARNOL from Noltex L.L.C. Examples of such EVOH resins include EVAL F101, EVAL E105, EVAL J102, and SOARNOL DT2903, SOARNOL DC3203 and SOARNOL ET3803. Of note are EVOH resins sold under the tradename EVAL SP obtained from Eval Company of America or Kuraray Company of Japan. EVAL SP is a type of EVOH that exhibits enhanced plasticity and that is suited for use in packaging applications including shrink film, polyethylene terephthalate (PET)-type barrier bottles and deep-draw cups and trays. Examples of such EVOH resins include EVAL SP 521, EVAL SP 292 and EVAL SP 482.

The innermost layer of the package is the sealant. The sealant is selected to have minimum effect on taste, color or stability of the contents, to be unaffected by the product, and to withstand sealing conditions (such as liquid droplets, grease, dust). The sealant is typically a resin that can be bonded to itself (sealed) at temperatures substantially below the meting temperature of the outermost layer so that the outermost layer's appearance will not be affected by the sealing process and will not stick to the jaws of the sealing bar. Typical sealants used in multilayer pouches include ethylene copolymers, such as low density polyethylene (LDPE), linear low density polyethylene (LLDPE), metallocene polyethylene (mPE), or copolymers of ethylene with vinyl acetate or methyl acrylate or copolymers of ethylene and acrylic acid or methacrylic acid, optionally ionomerized (i.e., partially neutralized with metal ions such as Na, Zn, Mg, or Li). The sealant can be a variety of polymers, but is preferably polyethylene, ethylene/vinyl acetate copolymer or an ionomer. These are suitable for packaging a wide variety of food and other items such as medical and health care products, medical devices. Typical sealants can also include polypropylene copolymers. Sealant layers are typically 25 to 100 µm thick.

Representative examples of multilayer structures, particularly in the form of films, include those described below. In the multilayer structures, the symbol "/" represents a boundary between layers. "EAC Blend" represents a composition comprising an ethylene acid copolymer and a functional ethylene copolymer; "Ionomer Blend" represents a composition comprising an ionomer and a functional ethylene copolymer. In these structures, outside to inside layers of the multilayer structure as intended to be used in a package are listed in order from left to right. The list of structures below is not an exhaustive list of the structures of the invention, but rather merely sets forth some examples of preferred structures. Each structure will have particular advantages in a specific packaging end use.
Ionomer Blend/EVOH/ethylene vinyl acetate;
Ionomer Blend/EVOH/ethylene alkyl methacrylate;
EAC Blend/EVOH/ethylene vinyl acetate;
EAC Blend/EVOH/EAC Blend/ethylene alkyl acrylate;
EAC Blend/EVOH/ethylene alkyl methacrylate;
lonomer Blend/EVOH/lonomer Blend/ethylene vinyl acetate; lonomer/lonomer Blend/EVOH/ethylene alkyl acrylate;
Ethylene acrylic acid/lonomer Blend/EVOH/lonomer Blend/ethylene vinyl acetate;
Ethylene methacrylic acid/EAC Blend/EVOH/EAC Blend/ethylene alkyl acrylate;
lonomer Blend/EVOH/lonomer Blend/polyethylene;
EAC Blend/EVOH/EAC Blend/ethylene vinyl acetate;
EAC Blend/EVOH/EAC Blend/polyethylene;
lonomer Blend/polyamide/lonomer Blend/polyethylene;
lonomer Blend/polyamide/ethylene vinyl acetate;
lonomer Blend/polyamide/lonomer Blend/ethylene alkyl acrylate;
lonomer Blend/polyamide/ethylene alkyl methacrylate;
EAC Blend/polyamide/polyethylene;
EAC Blend/polyamide/ethylene vinyl acetate;
EAC Blend/polyamide/ethylene alkyl acrylate;
EAC Blend/polyamide/ethylene alkyl methacrylate;
lonomer Blend/polyamide/lonomer Blend/ethylene vinyl acetate;
lonomer/lonomer Blend/polyamide/ethylene alkyl acrylate;
Ethylene acrylic acid/lonomer Blend/polyamide/lonomer Blend/ethylene vinyl acetate;
Ethylene methacrylic acid/EAC Blend/polyamide/EAC Blend/ethylene alkyl acrylate;
EAC Blend/ polyamide/EAC Blend/ethylene vinyl acetate;
EAC Blend/ polyamide/EAC Blend/polyethylene;
lonomer Blend/Al foil/lonomer Blend/polyethylene;
lonomer Blend/Al foil/lonomer Blend/ethylene alkyl acrylate;
EAC Blend/Al foil/ethylene vinyl acetate;
EAC Blend/Al foil/EAC Blend/ethylene alkyl acrylate;
EAC Blend/Al foil/EAC Blend/ethylene alkyl methacrylate;
lonomer Blend/Al foil/lonomer Blend/ethylene vinyl acetate;
lonomer/lonomer Blend/Al foil/lonomer Blend/ethylene alkyl acrylate;
Ethylene acrylic acid/lonomer Blend/Al foil/lonomer Blend/ethylene vinyl acetate;
Ethylene methacrylic acid/EAC Blend/Al foil/EAC Blend/ethylene alkyl acrylate;
lonomer Blend/Al foil/lonomer Blend/ethylene vinyl acetate;
EAC Blend/Al foil/EAC Blend/ethylene vinyl acetate; and
EAC Blend/Al foil/EAC Blend/polyethylene.

Packages comprising the composition described herein may be useful as films and pouches for packaging meat and other foodstuffs, for example those that are stored at low temperatures; pouches and bottles used for containing and dispensing health care solutions or other fluids; and tubing for transferring health care solutions or other fluids. Currently, it is common practice to supply medical fluids or solutions for parenteral administration (such as intravenous ("IV") administration) in the form of disposable, flexible pouches. One class of these pouches is commonly referred to as an "IV bag." Other fluids that can be packaged in pouches include beverages. The beverage can be any liquid for drinking, such as water, fruit or vegetable juices or juice drinks, soy-based products, dairy products, other flavored drinks, optionally including additional ingredients such as nutrients, electrolytes, vitamins, fiber, flavoring agents, coloring agents, preservatives, antioxidants suitable for human consumption.

### Processes for Fabricating Films, Sheets and Packaging

The compositions described herein can be (co)extruded and formed into a film by various film-forming means. Suitable films and fabrication methods include, for example but not limitation, blown films, cast films, laminated films, and extrusion coated films. Molten extruded polymers can be converted into a film using any suitable converting technique. For example, a multilayer film can be prepared by coextrusion as follows: granulates of the compositions used in the various layers are melted in extruders. The molten polymers are passed through a die or set of dies to form layers of molten polymers that are processed as a layered flow. The molten polymers are cooled to form a multilayer structure. A film can also be made by coextrusion followed by lamination onto one or more other layers. Other suitable converting techniques are, for example, blown film extrusion, cast film extrusion, cast sheet extrusion and extrusion coating.

In some preferred sheets and films, the compositions may be included as one or more layers of a multilayer polymeric structure in which additional layers of thermoplastic resins may be included to provide functional layers to provide additional functionality to the article. Of note are such multilayer structures comprising ionomeric materials in at least one additional layer. The layer(s) of the acid copolymer composition and other polymeric layers may be formed independently and then adhesively attached to one another to form an article. The article may also be fabricated by extrusion coating or laminating some or all of the layers onto a substrate. Some of the components of an article may be formed together by coextrusion, particularly if the components are relatively coplanar. Thus, an article may be a film or sheet comprising a layer of the modified acid copolymer composition and one or more additional layers of different thermoplastic material(s) in a multilayer coextruded film or sheet.

A film can be oriented after it has been quenched or cast. The film may be uniaxially oriented, or it can be biaxially oriented by drawing in two mutually perpendicular directions in the plane of the film to achieve a satisfactory combination of mechanical and physical properties. The film optionally may be annealed after orientation.

Orientation and stretching apparatus are known in the art and may be adapted by those skilled in the art to produce the films that are described herein. Examples of film orienting apparatus and processes include, for example, those disclosed in U.S. Patent Nos. 3,278,663; 3,337,665; 3,456,044; 4,590,106; 4,760,116; 4,769,421; 4,797,235 and 4,886,634.

Alternatively, a film can be oriented using a double bubble extrusion process, in which biaxial orientation may be effected by extruding a primary tube which is subsequently quenched, reheated and then expanded by internal gas pressure to induce transverse orientation, and drawn by differential speed nip or conveying rollers at a rate which will induce longitudinal orientation. The double bubble technique can be carried out as described in U.S. Patent No. 3,456,044, for example.

Films used as packaging material may also be processed further by printing, embossing, and/or coloring, for example, to provide a packaging material that provides information to the consumer, such as information about the product therein, or to provide the package with a pleasing appearance.

Alternatively or in addition, the films and sheets may be further processed into shaped articles that could be included in packaging (for example, multilayer containers such as blister packs, trays and cups). The further processing can include with uniaxial or biaxial stretching, axial heat sealing, thermoforming, vacuum forming, sheet folding and heat sealing (form-fill-seal), compression molding or like molding or forming processes.

In thermoforming processes, a film or sheet is heated above its softening temperature and formed into a desired shape. This formed sheet is usually referred to as a forming web. Various systems and devices are used in a thermoforming process, often accompanied by vacuum-assist and plug-assist components to provide the proper forming of the forming web into a predetermined shape. Thermoforming processes and systems are well known in the art. Films comprising the acid copolymer blend can be thermoformed at temperatures within the range of from 100 °C to 180 °C. Often, the thermoformed articles are shaped to conform to the shape of the product that is to be contained within the package. Thermoformed packages can be used to contain processed meats such as hot dogs, sausages.

Films can also be used as web stock to be formed into pouches. Pouches are formed from web stock by cutting and adhering (with an adhesive or by heat sealing, e.g.) separate pieces of web stock, or by a combination of folding and adhering with cutting. Pouches can be prepared by providing a continuous web of packaging film in which the film is disposed in a U- or V-shaped trough. A stand-up pouch can be prepared by providing a continuous web of packaging film in which the film comprises a gusset or pleat to provide a W-shaped trough.

The continuous web of packaging film used to prepare a flexible pouch may comprise a single sheet of film that is disposed into a trough as described above. Alternatively, the web may comprise two or three sheets of packaging film that are bonded together by, for example, heat sealing seam(s) at the bottom of the trough. In this alternative, the sheets may be the same or different. A particular form of stand-up pouch comprises three sheets of packaging film, one of which forms the bottom of the pouch and is pleated, and two that form the sides of the pouch. The sheets are joined together by two seams at the bottom of the trough. The seams provide sufficient rigidity to the pouch to enable it to stand upright.

The trough-shaped web is divided into receptacles the size of individual pouches by transverse seals prepared typically by means of heat sealing. Pouches may optionally comprise fitments to enable access to the contents of the pouch after filling. The fitment is inserted between the margins of the film web, and a top seal of the pouch is made by sealing the fitment to the margins of the web and sealing the margins to each other. The individual pouches are cut from the web by means of transverse cutters. The operations of forming, filling and sealing the pouch can be prepared by performing the steps described above concurrently and/or sequentially.

In a particular embodiment, the pouch may be prepared, a fitment inserted and the pouch subsequently filled. The "preformed" pouch of this embodiment is prepared generally as described above, in which flexible packaging film(s) are formed into a pouch shape and the fitment inserted between the ends of the film(s) and joined to the film(s), for example by heat sealing. In this embodiment, portions of the film margins are not sealed together, providing an opening for subsequent filling of the pouch. For example, the fitment is inserted and joined to the pouch at the junction of a transverse seal and the open end of the pouch, and the remainder of the open end is left unsealed. The pouch may also be shaped so that the fitment is inserted and sealed in a diagonal corner of the open end of the pouch. Pouches prepared in this embodiment can be collected and transported to a separate filling operation to be filled with contents. In the filling operation, the desired amount of the contents of the pouch is placed into the pouch through the opening, typically by means of a metering valve. The opening is sealed by joining the margins of the film(s) that form the opening (for example, by heat sealing) to form a top seal.

Pouch making equipment such as that made by Totani Corporation, Kyoto, Japan or Klockner Barlelt Co., Gordonsville, Va. can be advantageously used.

The containers and packaging materials can be of various other shapes including trays, cups, caps, or lids prepared from sheets by vacuum or pressure forming; shapes prepared by deep drawing an unstretched sheet (i.e. thermoforming); shapes prepared by compression molding or other molding processes; and shapes prepared by folding a sheet and heat sealing its edges such as a gable-topped carton.

### Other Components of the Shaped Articles

Articles comprising the compositions described herein may further comprise other components. Examples of other thermoplastic materials that can be used to form a component of an article in addition to a component formed from the acid copolymer compositions in multicomponent or multilayer structures (e.g. films or sheets) can be selected from nonionomeric thermoplastic copolymers and/or conventional ionomeric thermoplastic copolymers.

Nonionic thermoplastic resins include, by way of non-limiting illustrative examples, thermoplastic elastomers, such as polyurethane, poly-ether-ester, polyamide-ether, polyether-urea, PEBAX (a family of block copolymers based on polyether-block-amide, commercially supplied by Atochem), styrene-butadienestyrene (SBS) block copolymers, styrene(ethylene-butylene)-styrene block copolymers, polyamide (oligomeric and polymeric), polyamides, polyesters, polyolefins, including polyethylene, polypropylene, ethylene/propylene copolymers, ethylene copolymers with various comonomers, such as vinyl acetate, (meth)acrylates, (meth)acrylic acid, epoxy-functionalized monomer, CO, functionalized polymers with maleic anhydride, epoxidization, either by copolymerization or by grafting, elastomers such as EPDM, and metallocene catalyzed PE and copolymers.

Suitable polyamides (nylons) are well known to those skilled in the art. Polyamides are generally prepared from lactams or amino acids (e.g. nylon 6 or nylon 11), or prepared from condensation of diamines such as hexamethylene diamine with dibasic acids such as succinic, adipic, or sebacic acid. Copolymers and terpolymers of these polyamides are also included. Preferred polyamides include polyepsiloncaprolactam (nylon 6); polyhexamethylene adipamide (nylon 6,6); nylon 11; nylon 12, nylon 12,12 and copolymers and terpolymers such as nylon 6/6,6; nylon 6,10; nylon 6,12; nylon 6,6/12; nylon 6/6,10 and nylon 6/6T. More preferred polyamides are polyepsiloncaprolactam (nylon 6), polyhexamethylene adipamide (nylon 6,6), and most preferred is nylon 6. Although these polyamides described above are preferred polyamides, other polyamides such as amorphous polyamides may be used.

The elastomeric polyolefins are polymers composed of ethylene and higher primary olefins such as propylene, hexene, octene and optionally 1,4-hexadiene and or ethylidene norbornene or norbornadiene. The elastomeric polyolefins can be functionalized with maleic anhydride.

The following examples are provided to describe the invention in further detail. These examples, which set forth a preferred mode presently contemplated for carrying out the invention, are intended to illustrate and not to limit the invention.

### EXAMPLES

Melt index (MI) is the mass rate of flow of a polymer through a specified capillary under controlled conditions of temperature and pressure. It is typically measured according to ASTM 1238 using a 2160 gram weight, and measured at 190°C.

### Materials Used

EAC-1: An ethylene methacrylic acid copolymer with 9 weight % of copolymerized methacrylic acid, having a MI of 2.5.

F-1: An ethylene ethyl hydrogen maleate copolymer with 9.5 weight % of copolymerized ethyl hydrogen maleate, having a MI of 40.

Ionomer-1: An ethylene methacrylic acid copolymer with 10 weight % of copolymerized methacrylic acid, neutralized with 1.47 weight % of sodium cations, having a MI of 1.3.

Ionomer-2: An ethylene methacrylic acid copolymer with 10.5 weight % of copolymerized methacrylic acid, neutralized with 2.7 weight % of zinc cations, having a MI of 1.1.

The compositions of the Examples listed in Table 1 were prepared by melt blending using a 30-mm diameter twin screw extruder with a mixing screw, using a melt temperature of from 180 °C to 230 °C.

### Example 1

A blend of 60 weight % of EAC-1 and 40 weight % of F-1 was prepared by melt blending using a 30-mm diameter twin screw extruder with a mixing screw, using a melt temperature of from 190 °C to 210 °C. Press molded film with a thickness of 0.025 cm was prepared at 190 °C. Comparative films were prepared under the same conditions from neat EAC-1 and neat F-1.

The adhesion strength of each film to aluminum foil was determined according to the following procedure. Three-layer composites were assembled by stacking in order: Aluminum foil/press molded film/aluminum foil. The aluminum foil was 5 mil (127 µm) thick. The stacked layers were preheated in a lamination press set at 125°C for 5 minutes and then pressed for 30 seconds at 44 psi (3.1 kg/cm²) pressure to form the laminated composite structure. After the structure was cooled to room temperature, 1-inch (2.54 cm) wide strips were cut from the 3-layer composites. The peel strength strips were tested for adhesion characteristics in an INSTRON (90 degree peel test; at a speed of 50 mm/minute). Example 1 showed peel adhesion strength of 1.16 kilograms/centimeter. Films prepared from either pure EAC-1 or pure F-1 provided much lower adhesion to Al foil under these conditions.

**Table 1**

| Example | Composition | Peel Strength (grams/centimeter) |
|---|---|---|
| 1 | F-1/EAC-1 (40/60%) | 1161 |
| C2 | F-1 (100%) | 409 |
| C3 | EAC-1 (100%) | 482 |

### Example 2

A blend of 80 weight % of Ionomer-1 and 20 weight % of F-1 was prepared in a Werner and Pflederer twin screw extruder of 30-mm diameter by melt blending using mixing screws at a melt temperature of 230 °C.

The composition had MI of 0.09, compared to 1.3 for the unmodified Ionomer-1 and 40 for F-1. Compositions having a higher melt viscosity, as characterized indirectly here by a lower MI, are more useful in blow molding processes.

### Example 3

A blend of 30 weight % of Ionomer-1, 40 weight % of lonomer-2, and 30 weight % of F-1 was prepared in a Werner and Pflederer twin extruder of 30-mm diameter by melt blending using mixing screws at a melt temperature of 230°C. The composition showed MI of 0.7. This melt viscosity, as characterized by MI, is useful for extrusion techniques, such as film formation, profile extrusion or injection molding.

Examples 2 and 3 demonstrate that the melt rheology of ionomers can be tailored by adding E/EHM. Also, Example 1 demonstrates that the incorporation of E/EHM introduces reactive functional groups for attaining high adhesion to other substrates.

## Claims

1. An article that is a multilayer film or sheet comprising a first layer and an additional layer directly adhered to the first layer wherein the additional layer comprises or is prepared from metal, EVOH or polyamide, wherein the first layer comprises a composition consisting essentially of:
(1) one or more ethylene acid copolymers comprising copolymerized units derived from the monomers (a) ethylene, (b) one or more α,β-ethylenically unsaturated monocarboxylic acids comprising from 3 to 8 carbon atoms, and optionally (c) one or more alkyl (meth)acrylates; and
(2) one or more functional ethylene copolymers comprising copolymerized units derived from the monomers (d) ethylene; (e) an alkyl monoester of an ethylenically unsaturated carboxylic acid comprising from 4 to 8 carbon atoms and two carboxylic acid groups; and optionally (f) up to about 5 weight% of vinyl acetate or one or more alkyl (meth)acrylates, based on the total weight of the functional ethylene copolymer;
wherein the alkyl groups comprise from 1 to 8 carbon atoms and are branched or unbranched and saturated or unsaturated; and
wherein at least a portion of the carboxylic acid moieties present in the ethylene acid copolymer(s) and the functional ethylene copolymer(s) is optionally neutralized.

2. The article of claim 1 that is a pouch, a bottle, tubing, a bag, or a package for containing a product.

3. The article of claim 1 or claim 2 wherein the ethylene acid copolymer is an E/X dipolymer or an E/X/Y terpolymer; wherein E represents copolymerized units derived from ethylene; X represents copolymerized units derived from the α,β-ethylenically unsaturated monocarboxylic acid; and Y represents copolymerized units derived from alkyl acrylate or alkyl methacrylate; and further wherein X is present in an amount of from 2 to 30 weight % of the E/X/Y copolymer; and Y is present in an amount of from 0 to about 40 weight % of the E/X/Y copolymer.

4. The article of Claim 3 wherein the ethylene acid copolymer is an E/X dipolymer consisting essentially of copolymerized units of ethylene and from 4 weight % to 30 weight % of copolymerized units of the α,β-ethylenically unsaturated carboxylic acid; or wherein the ethylene acid copolymer is an E/X/Y terpolymer consisting essentially of copolymerized comonomers of ethylene, α,β ethylenically unsaturated carboxylic acid and alkyl acrylate or alkyl methacrylate, wherein X is present in an amount from 2 to 25 weight % and Y is present in an amount from 0.1 to 40 weight %, based on the total weight of the E/X/Y terpolymer.

5. The article of any of claims 1 to 4 wherein the copolymerized units derived from (e) the alkyl monoester of an ethylenically unsaturated dicarboxylic acid are present in an amount of from 5 to 20 weight %, based on the total weight of the of the functional ethylene copolymer; and wherein the copolymerized units derived from (f) the one or more monomers selected from the group consisting of vinyl acetate, alkyl acrylate and alkyl methacrylate are present in an amount of up to about 5 weight % based on the total weight of the functional ethylene copolymer.

6. The article of Claim 5 wherein the dicarboxylic acid is present in an amount of from 5 to 15 weight %, based on the total weight of the functional ethylene copolymer; or wherein the dicarboxylic acid is a copolymerized unit derived from a C₁-C₄ alkyl monoester of maleic acid, present in an amount of from 8 to 12 weight %, based on the total weight of the functional ethylene copolymer; or wherein the dicarboxylic acid is a copolymerized unit derived from ethyl hydrogen maleate or methyl hydrogen maleate; or wherein one or more of vinyl acetate, alkyl acrylate or alkyl methacrylate are present in the functional copolymer in an amount of from 0.1 to 10 weight %, based on the total weight of the functional ethylene copolymer.

7. The article of any of claims 1 to 6 wherein at least a portion of the combined carboxylic acid moieties present in the ethylene acid copolymer and the functional ethylene copolymer is neutralized and the counterions comprise one or more alkali metal, transition metal, or alkaline earth metal cations.

8. The article of any of Claims 1 to 7 further comprising a nonionomeric thermoplastic material selected from the group consisting of polyamides, copolyetheresters, copolyetheramides, elastomeric polyolefins, styrene diene block copolymers, thermoplastic polyurethanes, polyolefins, and maleic anhydride-grafted polymers.

9. The article of Claim 8 wherein the maleic anhydride-grafted polymer is maleated polyethylene, maleated polypropylene, maleated polyethylene/polypropylene rubber, maleated styrene-ethylene-butene-styrene triblock copolymer, or maleated polybutadiene.

10. A composition consisting essentially of:
(1) one or more ethylene acid copolymers comprising copolymerized units derived from the monomers (a) ethylene, (b) one or more α,β-ethylenically unsaturated monocarboxylic acids comprising from 3 to 8 carbon atoms, and optionally (c) one or more alkyl (meth)acrylates; and
(2) one or more functional ethylene copolymers comprising copolymerized units derived from (d) ethylene; (e) an alkyl monoester of an ethylenically unsaturated carboxylic acid comprising from 4 to 8 carbon atoms and at least two carboxylic acid groups; and optionally (f) vinyl acetate or one or more alkyl (meth)acrylates;
wherein the alkyl groups comprise from 1 to 8 carbon atoms and are branched or unbranched and saturated or unsaturated; and
wherein at least a portion of the carboxylic acid moieties present in the ethylene acid copolymer(s) and the functional ethylene copolymer(s) is optionally neutralized.

11. The composition of Claim 10 wherein the ethylene acid copolymer is an E/X dipolymer or an E/X/Y terpolymer; wherein E represents copolymerized units derived from ethylene; X represents copolymerized units derived from the α,β-ethylenically unsaturated monocarboxylic acid; and Y represents copolymerized units derived from alkyl acrylate or alkyl methacrylate; and further wherein X is present in an amount of from 2 to 30 weight % of the E/X/Y copolymer; and Y is present in an amount of from 0 to about 40 weight % of the E/X/Y copolymer; or wherein the ethylene acid copolymer is an E/X dipolymer consisting essentially of copolymerized units of ethylene and from 4 weight % to 30 weight % of copolymerized units of the α,β-ethylenically unsaturated carboxylic acid and optionally further wherein the ethylene acid copolymer is an E/X/Y terpolymer consisting essentially of copolymerized comonomers of ethylene, α,β ethylenically unsaturated carboxylic acid and alkyl acrylate or alkyl methacrylate, wherein X is present in an amount from 2 to 25 weight % and Y is present in an amount from 0.1 to 40 weight %, based on the total weight of the E/X/Y terpolymer; or wherein the functional ethylene copolymer comprises copolymerized units derived from (d) ethylene; (e) the alkyl monoester is present in an amount of from about 5 to about 20 weight %, based on the total weight of the of the functional ethylene copolymer; and (f) the one or more monomers selected from the group consisting of vinyl acetate, alkyl acrylate and alkyl methacrylate are present in an amount up to about 5 weight %, based on the total weight of the functional ethylene copolymer; or wherein at least a portion of the combined carboxylic acid moieties present in the ethylene acid copolymer and the functional ethylene copolymer is neutralized by one or more alkali metal, transition metal, or alkaline earth metal cations; or wherein said composition further comprises a nonionomeric thermoplastic material selected from the group consisting of polyamides, copolyetheresters, copolyetheramides, elastomeric polyolefins, styrene diene block copolymers, thermoplastic polyurethanes, polyolefins, and maleic anhydride-grafted polymers.

12. A shaped article comprising the composition of Claim 10 or Claim 11.

13. The shaped article of claim 12 that is formed by one or more methods selected from the group consisting of melt extrusion, extrusion blow molding, coextrusion blow molding, overmolding, thermoforming, profile extrusion, injection molding, compression molding, lamination, cutting and milling.

14. The shaped article of claim 12 or claim 13 that is selected from the group consisting of bottles, fuel tanks, containers, profiles, tubing, pellets, slugs, rods and ropes.

## Patentansprüche

1. Artikel, der eine Mehrschichtfolie oder -platte ist, die eine erste Schicht und eine zusätzliche Schicht umfasst, die direkt an der ersten Schicht befestigt ist, wobei die zusätzliche Schicht Metall, EVOH oder Polyamid umfasst oder daraus hergestellt ist, wobei die erste Schichte eine Zusammensetzung umfasst, die im Wesentlichen aus Folgendem besteht:
(1) einem oder mehreren Ethylensäurecopolymeren, die copolymerisierte Einheiten umfassen, die von den Monomeren (a) Ethylen, (b) einer oder mehreren α,β-ethylenisch ungesättigten Monocarbonsäuren, die 3 bis 8 Kohlenstoffatome umfassen, und wahlweise (c) einem oder mehreren Alkyl(meth)acrylaten abgeleitet sind; und
(2) einem oder mehreren funktionellen Ethylencopolymeren, die copolymerisierte Einheiten umfassen, die von den Monomeren (d) Ethylen; (e) einem Alkylmonoester einer ethylenisch ungesättigten Carbonsäure, die 4 bis 8 Kohlenstoffatome und zwei Carbonsäuregruppen umfasst; und wahlweise (f) bis zu etwa 5 Gew.-% Vinylacetat oder einem oder mehreren Alkyl(meth)acrylaten, auf das Gesamtgewicht des funktionellen Ethylencopolymers bezogen, abgeleitet sind;
wobei die Alkylgruppen 1 bis 8 Kohlenstoffatome umfassen und verzweigt, unverzweigt und gesättigt oder ungesättigt sind; und
wobei mindestens ein Teil der Carbonsäureanteile, die in dem/den Ethylensäurecopolymer(en) und dem/den funktionellen Ethylencopolymer(en) vorliegen, wahlweise neutralisiert wird.

2. Artikel nach Anspruch 1, der ein Sack, eine Flasche, Röhre, ein Beutel oder eine Packung zum Halten eines Produkts ist.

3. Artikel nach Anspruch 1 oder Anspruch 2, wobei das Ethylensäurecopolymer ein E/X-Dipolymer oder ein E/X/Y-Terpolymer ist; wobei E copolymerisierte Einheiten darstellt, die von Ethylen abgeleitet sind; X copolymerisierte Einheiten darstellt, die von der α,β-ethylenisch ungesättigten Monocarbonsäure abgeleitet sind; und Y copolymerisierte Einheiten darstellt, die von Alkylacrylat oder Alkylmethacrylat abgeleitet sind; und des Weiteren wobei X in einer Menge von 2 bis 30 Gew.-%, auf das E/X/Y-Copolymer bezogen, vorliegt; und Y in einer Menge von 0 bis etwa 40 Gew.-%, auf das E/X/Y-Copolymer bezogen, vorliegt.

4. Artikel nach Anspruch 3, wobei das Ethylensäurecopolymer ein E/X-Dipolymer ist, das im Wesentlichen aus copolymerisierten Einheiten von Ethylen und 4 Gew.-% bis 30 Gew.-% copolymerisierten Einheiten der α,β-ethylenisch ungesättigten Carbonsäure besteht; oder wobei das Ethylensäurecopolymer ein E/X/Y-Terpolymer ist, das im Wesentlichen aus copolymerisierten Comonomeren von Ethylen, α,β-ethylenisch ungesättigter Carbonsäure und Alkylacrylat oder Alkylmethacrylat besteht, wobei X in einer Menge von 2 bis 25 Gew.-% und Y in einer Menge von 0,1 bis 40 Gew.-%, auf das Gesamtgewicht des E/X/Y-Terpolymers bezogen, vorliegt.

5. Artikel nach einem der Ansprüche 1 bis 4, wobei copolymerisierte Einheiten, die von (e) dem Alkylmonoester einer ethylenisch ungesättigten Dicarbonsäure abgeleitet sind, in einer Menge von 5 bis 20 Gew.-%, auf das Gesamtgewicht des funktionellen Ethylencopolymers bezogen, vorliegen und wobei die copolymerisierten Einheiten, die von (f) des einen oder der mehreren Monomere abgeleitet sind, die aus der Gruppe ausgewählt sind bestehend aus Vinylacetat, Alkylacrylat und Alkylmethacrylat, in einer Menge von bis zu etwa 5 Gew.-%, auf das Gesamtgewicht des funktionellen Ethylencopolymers bezogen, vorliegen.

6. Artikel nach Anspruch 5, wobei die Dicarbonsäure in einer Menge von 5 bis 15 Gew.-%, auf das Gesamtgewicht des funktionellen Ethylencopolymers bezogen, vorliegt; oder wobei die Dicarbonsäure eine copolymerisierte Einheit ist, die von einem C₁-C₄-Alkylmonoester von Maleinsäure abgeleitet ist, die in einer Menge von 8 bis 12 Gew.-%, auf das Gesamtgewicht des funktionellen Ethylencopolymers bezogen, vorliegt; oder wobei die Dicarbonsäure eine copolymerisierte Einheit ist, die von Ethylwasserstoffmaleat oder Methylwasserstoffmaleat abgeleitet ist; oder wobei ein oder mehrere Vinylacetat, Alkylacrylat oder Alkylmethacrylat in dem funktionellen Copolymer in einer Menge von 0,1 bis 10 Gew.-%, auf das Gesamtgewicht des funktionellen Ethylencopolymers bezogen, vorliegt/vorliegen.

7. Artikel nach einem der Ansprüche 1 bis 6, wobei mindestens ein Teil der kombinierten Carbonsäureanteile, die in dem Ethylensäurecopolymer und dem funktionellen Ethylencopolymer vorliegen, neutralisiert wird und die Gegenionen ein oder mehrere Alkalimetall-, Übergangsmetall- oder Erdalkalimetallkationen umfassen.

8. Artikel nach einem der Ansprüche 1 bis 7, des Weiteren ein nichtionomeres, thermoplastisches Material umfassend, das aus der Gruppe ausgewählt ist bestehend aus Polyamiden, Copolyetherestern, Copolyetheramiden, elastomeren Polyolefinen, Styrol-Dien-Blockcopolymeren, thermoplastischen Polyurethanen, Polyolefinen und Maleinsäureanhydrid-gepfropften Polymeren.

9. Artikel nach Anspruch 8, wobei das Maleinsäureanhydrid-gepfropfte Polymer maleiertes Polyethylen, maleiertes Polypropylen, maleierter Polyethylen-Polypropylen-Kautschuk, maleiertes Styrol-Ethylen-Buten-Styrol-Triblockcopolymer oder maleiertes Polybutadien ist.

10. Zusammensetzung bestehend im Wesentlichen aus:
(1) einem oder mehreren Ethylensäurecopolymeren, die copolymerisierte Einheiten umfassen, die von den Monomeren (a) Ethylen, (b) einer oder mehreren α,β-ethylenisch ungesättigten Monocarbonsäuren, die 3 bis 8 Kohlenstoffatome umfassen, und wahlweise (c) einem oder mehreren Alkyl(meth)acrylaten abgeleitet sind; und
(2) einem oder mehreren funktionellen Ethylencopolymeren, die copolymerisierte Einheiten umfassen, die von den Monomeren (d) Ethylen; (e) einem Alkylmonoester einer ethylenisch ungesättigten Carbonsäure, die 4 bis 8 Kohlenstoffatome und zwei Carbonsäuregruppen umfasst; und wahlweise (f) Vinylacetat oder einem oder mehreren Alkyl(meth)acrylaten abgeleitet sind;
wobei die Alkylgruppen 1 bis 8 Kohlenstoffatome umfassen und verzweigt, unverzweigt und gesättigt oder ungesättigt sind; und
wobei mindestens ein Teil der Carbonsäureanteile, die in dem/den Ethylensäurecopolymer(en) und dem/den funktionellen Ethylencopolymer(en) vorliegen, wahlweise neutralisiert wird.

11. Zusammensetzung nach Anspruch 10, wobei das Ethylensäurecopolymer ein E/X-Dipolymer oder ein E/X/Y-Terpolymer ist; wobei E copolymerisierte Einheiten darstellt, die von Ethylen abgeleitet sind; X copolymerisierte Einheiten darstellt, die von der α,β-ethylenisch ungesättigten Monocarbonsäure abgeleitet sind; und Y copolymerisierte Einheiten darstellt, die von Alkylacrylat oder Alkylmethacrylat abgeleitet sind; und des Weiteren, wobei X in einer Menge von 2 bis 30 Gew.-%, auf das E/X/Y-Copolymer bezogen, vorliegt; und Y in einer Menge von 0 bis etwa 40 Gew.-%, auf das E/X/Y-Copolymer bezogen, vorliegt; oder wobei das Ethylensäurecopolymer ein E/X-Dipolymer ist, das im Wesentlichen aus copolymerisierten Einheiten von Ethylen und 4 Gew.-% bis 30 Gew.-% copolymerisierten Einheiten der α,β-ethylenisch ungesättigten Carbonsäure besteht und wahlweise des Weiteren wobei das Ethylensäurecopolymer ein E/X/Y-Terpolymer ist, das im Wesentlichen aus copolymerisierten Comonomeren von Ethylen, α,β-ethylenisch ungesättigter Carbonsäure und Alkylacrylat oder Alkylmethacrylat besteht, wobei X in einer Menge von 2 bis 25 Gew.-% und Y in einer Menge von 0,1 bis 40 Gew.-%, auf das Gesamtgewicht des E/X/Y-Terpolymers bezogen, vorliegt; oder wobei das funktionelle Ethylencopolymer copolymerisierte Einheiten umfasst, die von (d) Ethylen abgeleitet sind; (e) der Alkylmonoester in einer Menge von etwa 5 bis etwa 20 Gew.-%, auf das Gesamtgewicht des funktionellen Ethylencopolymers bezogen, vorliegt; und (f) das eine oder die mehreren Monomere, die aus der Gruppe ausgewählt sind bestehend aus Vinylacetat, Alkylacrylat und Alkylmethacrylat in einer Menge von bis zu etwa 5 Gew.-%, auf das Gesamtgewicht des funktionellen Ethylencopolymers bezogen, vorliegt/vorliegen; oder wobei mindestens ein Teil der kombinierten Carbonsäureanteile, die in dem Ethylensäurecopolymer und dem funktionellen Ethylencopolymer vorliegen, durch ein oder mehrere von Alkalimetall-, Übergangsmetall- oder Erdalkalimetallkationen neutralisiert werden; oder wobei die Zusammensetzung des Weiteren ein nichtionomeres thermoplastisches Material umfasst ausgewählt aus der Gruppe bestehend aus Polyamiden, Copolyetherestern, Copolyetheramiden, elastomeren Polyolefinen, Styrol-Dien-Blockcopolymeren, thermoplastischen Polyurethanen, Polyolefinen und Maleinsäureanhydrid-gepfropften Polymeren.

12. Gestalteter Artikel umfassend die Zusammensetzung nach Anspruch 10 oder Anspruch 11.

13. Gestalteter Artikel nach Anspruch 12, der durch ein oder mehrere Verfahren gebildet wird ausgewählt aus der Gruppe bestehend aus Schmelzextrusion, Extrusionsblasformen, Coextrusionsblasformen, Umspritzen, Thermoformen, Profilextrusion, Spritzgießen, Formpressen, Laminieren, Schneiden und Mahlen.

14. Gestalteter Artikel nach Anspruch 12 oder Anspruch 13, der aus der Gruppe ausgewählt wird bestehend aus Flaschen, Treibstofftanks, Behältern, Profilen, Röhren, Granulat, Rohlingen, Stangen und Seilen.

## Revendications

1. Article qui est un film ou une feuille multicouche comprenant une première couche et une couche supplémentaire qui adhère directement à la première couche, dans lequel la couche supplémentaire comprend ou est préparée à partir de métal, d'EVOH ou de polyamide, dans lequel la première couche comprend une composition constituée essentiellement de :
1) un ou plusieurs copolymère(s) d'acide éthylène comprenant des motifs copolymérisés dérivés des monomères (a) d'éthylène, (b) d'un ou plusieurs acide(s) monocarboxylique(s) α,β éthyléniquement insaturés comprenant de 3 à 8 atomes de carbone, et éventuellement (c) un ou plusieurs (méth)acrylate(s) d'alkyle ; et
2) un ou plusieurs copolymère(s) d'éthylène fonctionnel(s) comprenant des motifs copolymérisés dérivés des monomères (d) d'éthylène ; (e) un monoester d'alkyle d'un acide carboxylique éthyléniquement insaturé comprenant de 4 à 8 atomes de carbone et deux groupes acides carboxyliques ; et éventuellement (f) jusqu'à environ 5 % en poids d'acétate de vinyle ou un ou plusieurs (méth)acrylate(s) d'alkyle, sur la base du poids total du copolymère d'éthylène fonctionnel ;
dans lequel les groupes alkyles comprennent de 1 à 8 atome(s) de carbone et sont ramifiés ou non ramifiés et saturés ou non saturés ; et
dans lequel au moins une portion des fractions acide carboxylique présente dans le(s) copolymère(s) d'acide éthylène et le(s) copolymère(s) d'éthylène fonctionnel est éventuellement neutralisée.

2. Article selon la revendication 1 qui est une poche, une bouteille, une tubulure, un sac ou un emballage pour contenir un produit.

3. Article selon la revendication 1 ou la revendication 2, dans lequel le copolymère d'acide éthylène est un dipolymère E/X ou un terpolymère E/X/Y ; dans lequel E représente des motifs copolymérisés dérivés de l'éthylène ; X représente des motifs copolymérisés dérivés de l'acide monocarboxylique α,β éthyléniquement insaturé ; et Y représente des motifs copolymérisés dérivés de l'acrylate d'alkyle ou du méthacrylate d'alkyle ; et en outre dans lequel X est présent en une quantité de 2 à 30 % en poids du copolymère E/X/Y ; et Y est présent en une quantité de 0 à 40 % en poids du copolymère E/X/Y.

4. Article selon la revendication 3, dans lequel le copolymère d'acide éthylène est un dipolymère E/X constitué essentiellement des motifs copolymérisés d'éthylène et de 4 % en poids à 30 % en poids de motifs copolymérisés de l'acide carboxylique α,β éthyléniquement insaturé ; ou dans lequel le copolymère d'acide éthylène est un terpolymère E/X/Y constitué essentiellement de comonomères copolymérisés d'éthylène ; d'acide carboxylique α,β éthyléniquement insaturé et d'acrylate d'alkyle ou de méthacrylate d'alkyle, dans lequel X est présent en une quantité de 2 à 25 % en poids et Y est présent en une quantité de 0,1 à 40 % en poids, sur la base du poids total du terpolymère E/X/Y.

5. Article selon l'une quelconque des revendications 1 à 4, dans lequel les motifs copolymérisés dérivés du (e) monoester d'alkyle d'un acide dicarboxylique éthyléniquement insaturé sont présents en une quantité de 5 à 20 % en poids, sur la base du poids total du copolymère d'éthylène fonctionnel ; et dans lequel les motifs copolymérisés dérivés du (f) un ou plusieurs monomère(s) sélectionné(s) parmi le groupe constitué de l'acétate de vinyle, acrylate d'alkyle et méthacrylate d'alkyle sont présents en une quantité allant jusqu'à environ 5 % en poids sur la base du poids total du copolymère d'éthylène fonctionnel.

6. Article selon la revendication 5, dans lequel l'acide dicarboxylique est présent en une quantité de 5 à 15 % en poids, basé sur le poids total du copolymère d'éthylène fonctionnel ; ou dans lequel l'acide dicarboxylique est un motif copolymérisé dérivé d'un monoester d'alkyle en C₁-C₄ d'acide maléique, présent en une quantité de 8 à 12 % en poids, basé sur le poids total du copolymère d'éthylène fonctionnel ; ou dans lequel l'acide dicarboxylique est un motif copolymérisé dérivé d'hydrogéno-maléate d'éthyle ou d'hydrogéno-maléate de méthyle ; ou dans lequel un ou plusieurs acétate(s) de vinyle, acrylate(s) d'alkyle ou méthacrylate(s) d'alkyle sont présents dans le copolymère fonctionnel en une quantité de 0,1 à 10 % en poids sur la base du poids total du copolymère d'éthylène fonctionnel.

7. Article selon l'une quelconque des revendications 1 à 6, dans lequel au moins une portion des fractions acide carboxylique combinées présentes dans le copolymère d'acide d'éthylène et le copolymère d'éthylène fonctionnel est neutralisée et les contre-ions comprennent un ou plusieurs cation(s) de métal alcalin, métal de transition ou métal alcalino-terreux.

8. Article selon l'une quelconque des revendications 1 à 7, comprenant en outre un matériau thermoplastique non ionomère sélectionné parmi le groupe constitué des polyamides, copolyétheresters, copolyétheramides, polyoléfines élastomères, diènes séquencés de styrène, polyuréthanes thermoplastiques, des polyoléfines, et des copolymères greffés d'anhydride maléique.

9. Article selon la revendication 8, dans lequel le polymère greffé d'un anhydride maléique est le polyéthylène maléaté, le polypropylène maléaté, le caoutchouc de polyéthylène/polypropylène maléaté, le copolymère triséquencé maléaté de styrène-éthylène-butène-styrène ou le polybutadiène maléaté.

10. Composition essentiellement constituée de
1) un ou plusieurs copolymère(s) d'acide éthylène comprenant des motifs copolymérisés dérivés des monomères (a) d'éthylène, (b) d'un ou plusieurs acide(s) monocarboxylique(s) α,β éthyléniquement insaturés comprenant de 3 à 8 atomes de carbone et éventuellement (c) un ou plusieurs (méth)acrylate(s) d'alkyle ; et
2) un ou plusieurs copolymère(s) d'éthylène fonctionnels comprenant des motifs copolymérisés de (d) éthylène ; (e) un monoester d'alkyle d'un acide carboxylique éthyléniquement insaturé comprenant de 4 à 8 atomes de carbone et au moins deux groupes acide carboxylique ; et éventuellement (f) de l'acétate de vinyle ou un ou plusieurs (méth)acrylate(s) d'alkyle ;
dans lequel (lesquels) les groupes alkyles comprennent de 1 à 8 atome(s) de carbone et sont ramifiés ou non ramifiés et saturés ou insaturés ; et
dans lequel (lesquels) au moins une portion des fractions d'acide carboxylique présentes dans le(s) copolymère(s) d'acide éthylène et dans le(s) copolymère(s) d'éthylène fonctionnel(s) est éventuellement neutralisée.

11. Composition selon la revendication 10, dans laquelle le copolymère d'acide éthylène est un dipolymère E/X ou un terpolymère E/X/Y ; dans laquelle E représente des motifs copolymérisés dérivés de l'éthylène ; X représente des motifs copolymérisés dérivés de l'acide monocarboxylique α,β éthyléniquement insaturé ; et Y représente des motifs copolymérisés dérivés de l'acrylate d'alkyle ou du méthacrylate d'alkyle ; et en outre dans lequel X est présent en une quantité de 2 à 30 % en poids du copolymère E/X/Y ; et Y est présent en une quantité de 0 à 40 % en poids du copolymère E/X/Y ; ou dans lequel le copolymère d'acide éthylène est un dipolymère E/X constitué essentiellement de motifs copolymérisés d'éthylène et de 4 % en poids à 30 % en poids de motifs copolymérisés de l'acide carboxylique α,β éthyléniquement insaturé et en outre éventuellement dans lequel le copolymère d'acide éthylène est un terpolymère E/X/Y essentiellement constitué de comonomères copolymérisés d'éthylène, d'acide carboxylique α,β éthyléniquement insaturé et d'acrylate d'alkyle ou de méthacrylate d'alkyle, dans lequel X est présent en une quantité de 2 à 25 % en poids et Y est présent en une quantité de 0,1 à 40 % en poids, basé sur le poids total du terpolymère E/X/Y ; ou dans lequel le copolymère d'éthylène fonctionnel comprend des motifs copolymérisés dérivés (d) de l'éthylène ; (e) le monoester d'alkyle est présent en une quantité d'environ 5 à environ 20 % en poids, basé sur le poids total du copolymère d'éthylène fonctionnel ; et (f) le un ou plusieurs monomère(s) sélectionné(s) parmi le groupe constitué de l'acétate de vinyle, l'acrylate d'alkyl et du méthacrylate d'alkyle sont présents en une quantité allant jusqu'à environ 5 % en poids, basé sur le poids total du copolymère d'éthylène fonctionnel ; ou dans lequel au moins une portion des fractions d'acide carboxylique combinées présentes dans le copolymère d'acide d'éthylène et le copolymère d'éthylène fonctionnel est neutralisée par un ou plusieurs cation(s) de métal alcalin, de métal de transition ou de métal alcalino-terreux ; ou dans lequel ladite composition comprend en outre un matériau thermoplastique non ionomère sélectionné parmi le groupe constitué des polyamides, copolyétheresters, copolyétheramides, polyoléfines élastomères, diènes séquencés de styrène, polyuréthanes thermoplastiques, polyoléfines et polymères greffés d'anhydride maléique.

12. Article profilé comprenant la composition selon la revendication 10 ou la revendication 11.

13. Article profilé selon la revendication 12 qui est formé par un ou plusieurs procédé(s) sélectionné(s) parmi le groupe constitué de l'extrusion à l'état fondu, du moulage d'extrusion soufflage, du moulage de co-extrusion soufflage, du surmoulage, du thermoformage, de l'extrusion de profilés, du moulage par injection, du moulage par compression, de la stratification, de la découpe et du fraisage.

14. Article profilé selon la revendication 12 ou la revendication 13 qui est sélectionné parmi le groupe constitué des bouteilles, des cuves de carburant, des conteneurs, des profilés, des tubulures, des pastilles, des wagons-remorques, des barreaux et des cordes.
